(19) Europäisches Patentamt
European Patent Office
Office européen des brevets

(11) Veröffentlichungsnummer: **0 316 681**
**A2**

# (12) EUROPÄISCHE PATENTANMELDUNG

(21) Anmeldenummer: **88118375.0**

(22) Anmeldetag: **04.11.88**

(51) Int. Cl.⁴: **C08L 71/00 , C08L 81/06 , C08J 5/24**

(30) Priorität: **14.11.87 DE 3738749**

(43) Veröffentlichungstag der Anmeldung: **24.05.89 Patentblatt 89/21**

(84) Benannte Vertragsstaaten: **CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Winkler, Matthias, Dr.**
**Buchsstrasse 24**
**D-7318 Lenningen 1(DE)**
Erfinder: **Ittemann, Peter,Dr.**
**Wilhelm-Busch-Strasse 87**
**D-6700 Ludwigshafen(DE)**
Erfinder: **Heinz, Gerhard,Dr.**
**Im Vogelsang 2**
**D-6719 Weisenheim(DE)**

## (54) Faserverbundwerkstoffe.

(57) Die Erfindung betrifft Faserverbundwerkstoffe aus einer Kunststoffmatrix und Verstärkungsfasern, wobei die Kunststoffmatric eine Mischung aus 90 bis 40 Gew.% Polyethersulfon und 10 bis 60 Gew.% Polyetherketon ist. Die Werkstoffe finden im Automobilbau und in der Luft- und Raumfahrtindustrie Anwendung.



Xerox Copy Centre

## Faserverbundwerkstoffe

Die Erfindung betrifft Faserverbundwerkstoffe aus einem hochtemperaturbeständigen thermoplastischen Kunststoff und orientierten, endlosen Verstärkungsfasern mit verbesserten mechanischen Eigenschaften.

Polyethersulfone und Polyetherketone sind thermoplastische Kunststoffe, die sich durch ihre Temperaturbeständigkeit auszeichnen. Verbundwerkstoffe aus diesen Thermoplasten und orientierten endlosen Verstärkungsfasern weisen gute Festigkeitseigenschaften auf, sie sind daher für den Einsatz als hochbeanspruchbare, temperaturbeständige Werkstoffe geeignet. So werden z.B. Prepregs aus kohlenstoffaserverstärkten Polyethersulfonen bzw. Polyetherketonen zur Herstellung von Bauteilen für Flugzeuge eingesetzt.

Verbundwerkstoffe aus Polyetherketon-Prepregs weisen eine für viele Anwendungszwecke ungenügende Wärmeformbeständigkeit auf: der Schubmodul bei 200° C ist gegenüber dem Schubmodul bei Raumtemperatur um mehr als 50% erniedrigt, was z.B. von der Flugzeugindustrie für hochbeanspruchte Bauteile nicht mehr toleriert wird.

Verbundwerkstoffe aus Polyethersulfon-Prepregs weisen zwar diesen starken Abfall der Wärmeformbeständigkeit bei 200° C nicht auf, sie zeigen jedoch im Fall unidirektionaler Faserverstärkung eine gegenüber dem unverstärkten Werkstoff um mehr als 25 % erniedrigte Querfestigkeit, was auf eine ungenügende Haftung zwischen Kunststoffmatrix und Verstärkungsfasern zurückzuführen ist. Außerdem können Polyethersulfon-Formteile von organischen Lösungsmitteln angegriffen werden und weisen zusätzlich noch eine geringe Spannungsrißbeständigkeit auf.

Es ist bekannt, daß durch Zumischen von Polyetherketon zu Polyethersulfon die Spannungrißbeständigkeit von daraus hergestellten Formteilen etwas verbessert werden kann. Derartige Kunststoff-Blends sind in EP-A-176 988 und 176 989 beschrieben. Dort wird auch erwähnt, daß die Mischungen übliche Zusatzstoffe, wie z.B. Glasfasern enthalten können. In EP-A 224 236 sind Polyetherketon/Polyethersulfon-Blends beschrieben, die Füllstoffe, z.B. kurze Glas- oder Kohlenstoff-Fasern zugemischt enthalten. Faserverbundwerkstoff mit orientierten endlosen Fasern sowie deren vorteilhafte Eigenschaften sind jedoch nicht beschrieben.

Der Erfindung lag also die Aufgabe zugrunde, Faserverbundwerkstoffe mit hoher Wärmeformbeständigkeit und gegenüber Polyethersulfon-Prepregs stark verbesserter Spannungsrißbeständigkeit und Querzugfestigkeit sowie besserem Brandverhalten bereitzustellen.

Diese Aufgabe wird gelöst durch Verwendung einer Mischung aus
90 bis 40, vorzugsweise 80 bis 50 Gew.% eines Polyethersulfons und
10 bis 60, vorzugsweise 20 bis 50 Gew.% eines Polyetherketon
als Kunststoffmatrix.

Polyethersulfone sind lineare Ether- und Sulfongruppen enthaltende aromatische Hochpolymere mit einer reduzierten spezifischen Viskosität von 40 bis 150 ml/g (gemessen 0,5 %ig in Phenol/o-Dichlorbenzol 1:1 bei 25° C). Sie werden hergestellt durch nukleophile Polykondensation von Bisphenolen mit Dihalogenaromaten, die in para-Stellung durch elektronenanziehende Gruppen aktiviert sind, wobei mindestens eine der Ausgangsverbindungen eine -$SO_2$-Gruppe enthält. Wenn dabei eines der Monomeren oder auch beide teilweise durch andersartige Monomere, auch solche, die keine $SO_2$-Gruppen enthalten, ersetzt sind, entstehen entsprechende Copolymere, wobei je nach Reaktionsführung solche mit statistischer Verteilung der Comonomeren oder solche mit Blockstruktur hergestellt werden können.

Besonders bevorzugte Polyethersulfone sind solche mit den Strukturen:

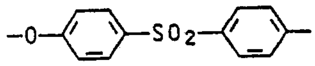

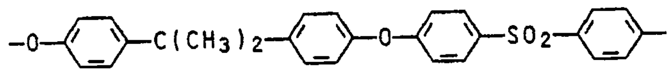

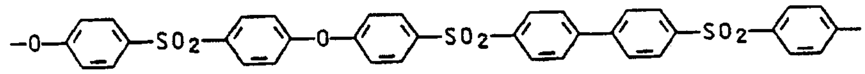

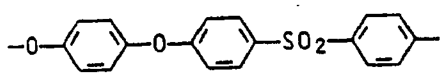

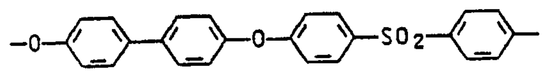

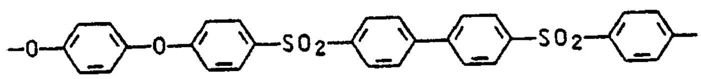

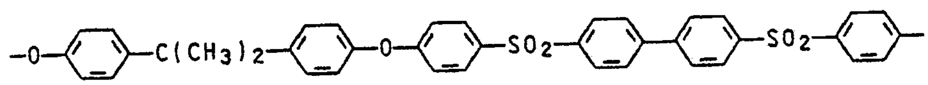

Polyetherketone sind lineare Ether- und Ketogruppen enthaltende aromatische Hochpolymere, vorzugsweise mit einer reduzierten spezifischen Viskosität von 60 bis 160 ml/g (gemessen 1 %ig in konzentrierter Schwefelsäure bei 25° C). Sie können hergestellt werden durch nukleophile Polykondensation von Bisphenolen, mit aktivierten Dihalogenaromaten, wobei mindestens eine der Ausgangsverbindungen eine -CO-Gruppe enthält, und wobei wiederum Copolymere eingeschlossen sein sollen. Sie können aber auch hergestellt werden durch Friedel-Crafts-Polykondensation entweder von aromatischen Säurehalogeniden oder von aromatischen Disäurehalogeniden mit mehrkernigen Ethergruppen enthaltenden Aromaten, die mindestens zwei aktivierte Wasserstoffatome tragen, wobei ebenfalls wieder Copolymere möglich sind.

Besonders bevorzugte Polyetherketone sind solche mit den Strukturen:

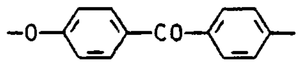

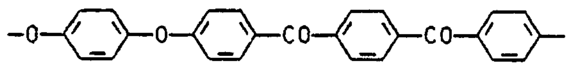

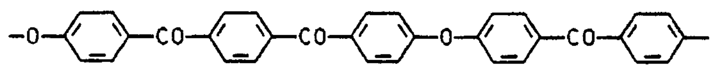

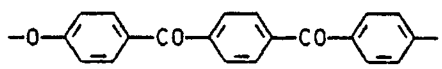

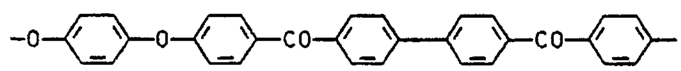

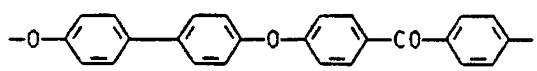

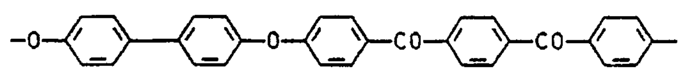

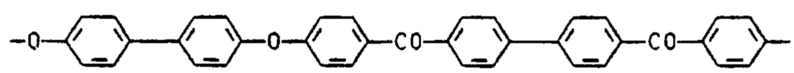

Als Verstärkungsfasern kommen solche aus Glas, Kohlenstoff oder aromatischen Polyamiden in Frage. Sie liegen im Faserverbundwerkstoff als Endlosfasern in bestimmten Vorzugsrichtungen orientiert vor. Bei der Herstellung der Werkstoffe können die Fasern, die übliche Haftvermittler und Schlichten tragen können, als Einzel-Roving, als paralleles Fasergelege oder als Gewebe oder Gewirke eingesetzt werden. Das Volumen-Verhältnis Kunststoff zu Verstärkungsfasern liegt zwischen 70:30 und 20:80, vorzugsweise zwischen 55:45 und 35:65.

Die Herstellung der erfindungsgemäßen Faserverbundwerkstoffe kann auf verschiedenartige Weise erfolgen.

Bei einer bevorzugten Ausführungsform werden Polyethersulfon und Polyetherketon als Schmelze vermischt und mit dieser Schmelze werden die Verstärkungsfasern imprägniert.

Bei einer anderen bevorzugten Ausführungsform wird die Schmelze der Polymer-Mischung zu Fasern gesponnen, diese Fasern werden mit Verstärkungsfasern zu einem Hybrid-Garn verarbeitet (siehe EP 156 599) aus welchem Gewebe oder Gewirke hergestellt werden können. Durch Verpressen oberhalb der Erweichungstemperatur des Polymeren wird der Verbundwerkstoff erhalten.

Bei einer weiteren bevorzugten Ausführungsform werden feine Pulver der Polymeren gut gemischt, dieses Pulvergemisch kann dann entweder im Wirbelbett direkt auf die Verstärkungsfasern aufgebracht werden oder es kann mit Hilfe geeigneter Emulgatoren in Wasser dispergiert werden, wobei mit dieser Dispersion dann die Fasern imprägniert werden.

Schließlich ist es auch möglich, die Polymeren in geeigneten Lösungsmitteln (in Frage kommen p-Chlorphenol und konzentrierte Schwefelsäure) zu lösen und mit dieser Lösung die Fasern zu tränken.

Die Faserverbundwerkstoffe können als Prepreg-Rovings vorliegen, die z.B. auf Kerne gewickelt und zu Hohlkörpern verarbeitet werden können. Flächige Laminate können - ggf. in verschiedenen Orientierungsrichtungen -übereinander drapiert und verpreßt werden.

Die erfindungsgemäßen Faserverbundwerkstoffe zeichnen sich gegenüber solchen auf Basis von Polyetherketon durch erhöhte Wärmeformbeständigkeit bei 200 °C aus.

Gegenüber Faserverbundwerkstoffen auf Basis von Polyethersulfon weisen sie eine stark verbesserte Spannungsrißbeständigkeit gegen aggressive Medien auf. Es war zwar zu erwarten, daß die Spannungsrißbeständigkeit etwas verbessert wird, da Polyetherketone im Gegensatz zu Polyethersulfonen in organischen Lösungsmitteln nicht löslich sind. Das Ausmaß der Verbesserung war jedoch nicht vorhersehbar, insbesondere nicht die Tatsache, daß die Spannungsrißbeständigkeit der erfindungsgemäßen Faserverbundwerkstoffe besser ist als bei entsprechenden Werkstoffen ohne Verstärkungsfasern. Ein weiterer Vorteil gegenüber Faserverbundwerkstoffen auf Basis von Polyethersulfon ist die verbesserte Haftung zwischen Kunststoffmatrix und Fasern, was zu einer erhöhten Querzugfestigkeit führt. Dabei werden 80 bis 100 % der Querzugfestigkeit des faserfreien Werkstoffs erreicht. Schließlich zeichnen sich die erfindungsgemäßen Faserverbundwerkstoffe noch durch ihre günstigeren Brandeigenschaften gegenüber Prepregs auf Basis von Polyethersulfon aus.

Die Faserverbundwerkstoffe können zur Herstellung von Bauteilen für den Automobilsektor, die Flugzeug- und Raumfahrtindustrie, oder für den Maschinenbau, verwendet werden.

Die in den Beispielen genannten Teile und Prozente beziehen sich auf das Gewicht.

## Beispiel 1

Ein Granulatgemisch aus 9 kg Polyetherketon-etherketonketon ($[-O-Ph-CO-Ph-O-Ph-CO-Ph-CO-PH]_n$) und 21 kg Polyethersulfon (Ultrason E 2000 der BASF AG) ($[-O-Ph-SO_2-Ph-]_n$) wurden auf einem ZSK-53-Extruder der Firma Werner & Pfleiderer bei 360 °C Außentemperatur extrudiert, der heiße Strang in einem Wasserbad abgekühlt und in einem Granulator abgeschlagen.

Dieses Material wurde zur Schmelzimprägnierung von Kohlenstoff-Fasern eingesetzt.

Parallele C-Faser-Rovings wurden kontinuierlich mit einer Geschwindigkeit von 0,2 m/min über eine Schlitzdüse geführt, aus der obengenanntes Material extrudiert wurde. Durch 4 beheizte Umlenkrollen wurde vollständige Durchtränkung der Verstärkungsfasern erreicht.

Ein so erhaltenes Halbzeug mit einem Matrixgehalt von 40 Vol.% wurde zu Probekörpern verpreßt, deren Querzugsfestigkeit nach DIN 53504 geprüft wurde. Es wurde eine Querzugfestikeit von 88 N/mm$^2$ gemessen, was 98 % der Theorie entspricht.

## Beispiel 2

18 kg Polysulfon-Pulver ($[-O-Ph-SO_2-PH-O-Ph-SO_2-Ph-]_n$) wurden intensiv mit 12 kg Polyetheretherketon-Pulver (Victrex PEEK 450 P der Firma ICI) ($[-O-Ph-O-Ph-CO-Ph-]_n$) gemischt.

Dieses Pulver wurde in einer 1,5 %igen Polyacrylsäure-Lösung in Wasser dispergiert. Die Dispersion wurde durch Neutralisation mit NaOH stabilisiert (pH = 7). Ein kontinuierlicher Glasfaser-Roving wurde mit Hilfe dieser Dispersion imprägniert und auf einer Trommel, dicht an dicht, abgelegt. Nachdem das so hergestellte Gelege an der Luft getrocknet war, wurde es parallel zur Trommelachse aufgeschnitten, von der Trommel abgenommen und durch Verpressen zu einem unidirektional verstärkten Probekörper von 76x350 cm verarbeitet. Dieses Material wurde nach FAR § 25.853 auf sein Brandverhalten getestet.

Es wurde eine verbrannte Länge (mit Beflammung nach Anforderungsklasse A) von 59 mm ermittelt.

## Beispiel 3

Ein Granulatgemisch aus 6 kg Polyetherketon ($[-O-Ph-CO-Ph-]_n$) und 24 kg Polysulfon (Ultrason S 2000 der BASF AG) ($[-O-Ph-SO_2-Ph-O-Ph-C(CH_3)_2-Ph]_n$) wurden auf einem ZSK-53-Extruder der Firma Werner & Pfleiderer bei 350 °C Außentemperatur extrudiert, der heiße Strang in einem Wasserbad abgekühlt und in einem Granulator abgeschlagen. Das erhaltene Granulat wurde weiterverarbeitet.

Es wurde durch Schmelzspinnen in einen Multifilament-Polymerfaden von 933 dtex und 140 Einzelfilamenten versponnen. Dieser Faden wurde in einer Hybridgarnanlage intensiv mit einer Kohlenstoffaser von 2000 dtex und 3000 Einzelfilamenten vermischt.

Das entstandene Hybridgarn wurde auf einen rechteckigen Rahmen aufgewickelt und dann durch Heißpressen in eine unidirektional verstärkte Verbundwerkstoffplatte überführt.

Probekörper, die aus dieser Platte entnommen werden, zeigten eine Querzugfestigkeit (DIN 53504) von 63 N/mm$^2$, was 89 % der Theorie entspricht.

## Ansprüche

Faserverbundwerkstoff, enthaltend
A. 20 bis 70 Vol.% eines hochtemperaturbeständigen thermoplastischen Kunststoffs und
B. 80 bis 30 Vol.% orientierte, endlose Verstärkungsfasern,
dadurch gekennzeichnet, daß A eine Mischung ist aus
90 bis 40 Gew.% eines Polyethersulfons und
10 bis 60 Gew.% eines Polyetherketons.